# EUROPÄISCHE PATENTSCHRIFT

(11) **EP 1 264 098 B1**
(45) Veröffentlichungstag und Bekanntmachung des Hinweises auf die Patenterteilung: **10.05.2006**
(21) Anmeldenummer: 01921150.7
(22) Anmeldetag: 10.02.2001
(51) Int. Cl.: F02D 41/40

(54) **VERFAHREN UND VORRICHTUNG ZUR STEUERUNG DER KRAFTSTOFFEINSPRITZUNG IN EINE BRENNKRAFTMASCHINE**
METHOD AND DEVICE FOR THE CONTROL OF THE FUEL INJECTION IN AN INTERNAL COMBUSTION ENGINE
PROCEDE ET DISPOSITIF DE COMMANDE DE L'INJECTION DE CARBURANT DANS UN MOTEUR A COMBUSTION INTERNE

(30) Priorität: 09.03.2000 DE 10011408; 27.07.2000 DE 10036579
(43) Veröffentlichungstag der Anmeldung: 11.12.2002
(73) Patentinhaber: ROBERT BOSCH GMBH, 70442 Stuttgart (DE)
(72) Erfinder: HENNING, Ruben-Sebastian, 70197 Stuttgart (DE); BRACK, Klemens, 69115 Heidelberg (DE); KERST, Andreas, 70619 Stuttgart (DE); VELDTEN, Burkhard, 31234 Edemissen (DE); OTTENBACHER, Dietmar, 71088 Holzgerlingen (DE); SAUERWEIN, Iris, 70376 Stuttgart (DE); BECHER, Stefan, 70563 Stuttgart (DE)
(86) Internationale Anmeldenummer: PCT/DE2001/000514
(87) Internationale Veröffentlichungsnummer: WO 2001/066927

(56) Entgegenhaltungen:
- EP-A- 0 953 756
- DE-C- 19 632 650
- PATENT ABSTRACTS OF JAPAN vol. 1999, no. 11, 30. September 1999 (1999-09-30) -& JP 11 173186 A (DENSO CORP), 29. Juni 1999 (1999-06-29)
- PATENT ABSTRACTS OF JAPAN vol. 017, no. 263 (M-1415), 24. Mai 1993 (1993-05-24) & JP 05 001609 A (TOYOTA MOTOR CORP), 8. Januar 1993 (1993-01-08)
- PATENT ABSTRACTS OF JAPAN vol. 015, no. 039 (M-1075), 30. Januar 1991 (1991-01-30) & JP 02 277940 A (TOYOTA MOTOR CORP), 14. November 1990 (1990-11-14)

## Beschreibung

### Stand der Technik

Die Erfindung betrifft ein Verfahren und eine Vorrichtung zur Steuerung der Kraftstoffeinspritzung in eine Brennkraftmaschine gemäß den Oberbegriffen der unabhängigen Ansprüche.

Ein solches Verfahren und eine solche Vorrichtung zur Steuerung der Kraftstoffeinspritzung in eine Brennkraftmaschine ist beispielsweise aus der DE 197 12 143 bekannt. Bei der dort beschriebenen Vorgehensweise wird die Kraftstoffeinspritzung in eine Voreinspritzung und in eine Haupteinspritzung aufgeteilt. Durch die Voreinspritzung können Geräuschemissionen deutlich reduziert werden.

Häufig erfolgt die Voreinspritzung nicht in allen Betriebszuständen. Dies bedeutet, in einem ersten Betriebszustand erfolgt eine Voreinspritzung und in einem zweiten Betriebszustand erfolgt keine Voreinspritzung. Beim abrupten Umschalten von einem Zustand mit Voreinspritzung in einen Betriebszustand ohne Voreinspritzung tritt ein plötzlicher Anstieg des Verbrennungsgeräusches auf. Dieser Anstieg der Verbrennungsgeräusche wird vom Fahrer als sehr irritierend empfunden.

Die DE-A 36 17 104 beschreibt Verfahren zur Steuerung einer Brennkraftmaschine beim Übergang von einem Startzustand zu einem Nachstartzustand. Dieser Einrichtung liegt die Aufgabe zu Grunde, das Startverhalten der Brennkraftmaschine zu verbessern. Zur Verbesserung des Startvorganges wird bei tiefen Temperaturen jeder Einspritzvorgang in eine große Anzahl von Kurzdauereinspritzimpulsen aufgeteilt. Beim Übergang in den Normalbetrieb wird die Anzahl dieser Kurzdauereinspritzimpulse pro Einspritzung verringert, bis lediglich nur noch ein Ansteuerimpuls pro Einspritzung verbleibt.

Ferner ist aus der EP-A-0 953 756 ein Verfahren und eine Vorichtung bekannt, bei dem beim Umschalten zwischen einem Zustand mit Teileinspritzung in einen Zustand ohne Teileinspritzung der Kraftstoffdruck abgesenkt wird.

### Vorteile der Erfindung

Mit der erfindungsgemäßen Vorgehensweise kann der plötzliche Anstieg der Verbrennungsgeräusche beim Übergang von einem Betriebszustand mit einer ersten Teileinspritzung und einer zweiten Teileinspritzung in einem Betriebszustand ohne erste Teileinspritzung deutlich reduziert werden. Bei der ersten Teileinspritzung handelt es sich vorzugsweise um eine Voreinspritzung, die unmittelbar vor der zweiten Teileinspritzung, die auch als Haupteinspritzung bezeichnet wird, erfolgt.

Dieses wird erfindungsgemäß dadurch erreicht, dass vor einem Übergang von einem ersten Zustand mit einer ersten Teileinspritzung in einen zweiten Zustand ohne erste Teileinspritzung die Geräuschentwicklung derart verändert wird, dass sich die Pegel der Geräuschemissionen vor dem Übergang und nach dem Übergang annähern. Dies wird dadurch erreicht, dass die Häufigkeit der Einspritzungen mit der ersten Teileinspritzung verändert wird.

Besonders vorteilhaft ist es, wenn bei einem Übergang von einem Zustand ohne erste Teileinspritzung in einen Zustand mit erster Teileinspritzung entsprechend vorgegangen wird.

Bei einer Weiterbildung ist vorgesehen, dass beim Übergang in einen Zustand ohne erste Teileinspritzung die erste Teileinspritzungen kontinuierlich immer häufiger ausgeblendet wird. Dies bedeutet, dass unmittelbar vor dem Übergang jede n-te erste Teileinspritzung ausgelassen wird. Dabei wird die Zahl n ausgehend von einem großen Wert nach einem bestimmten Schema langsam auf den Wert 1 abgesenkt. Dies bedeutet beispielsweise, dass zu Beginn jede 10. Einspritzung ausgeblendet wird und zum Schluss des Übergangs alle Einspritzungen ausgeblendet werden.

Zeichnung

Die Erfindung wird nachstehend anhand der in der Zeichnung dargestellten Ausführungsformen näher erläutert. Es zeigen Figur 1 ein Kraftstoffzumesssystem, schematisch als Blockdiagramm dargestellt, Figur 2 die Zeitdiagramme dreier Einspritzungen und Figur 3 ein Flussdiagramm der erfindungsgemäßen Vorgehensweise.

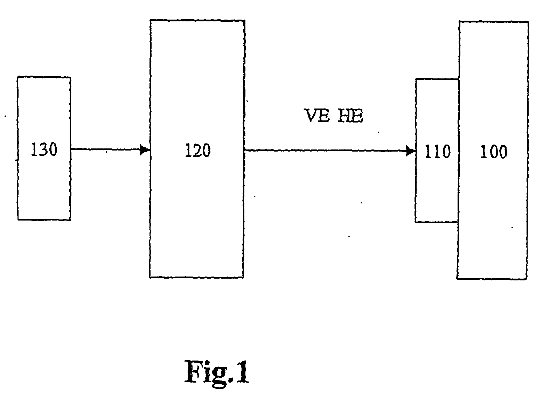

In Figur 1 sind die wesentlichen Elemente eines Kraftstoffzumesssystems einer Brennkraftmaschine schematisch als Blockdiagramm dargestellt. Eine Brennkraftmaschine ist mit 100 bezeichnet. Dieser wird über eine Kraftstoffzumesseinrichtung 110 Kraftstoff zugemessen. Die Kraftstoffzumesseinrichtung wird von einer Steuereinheit 120 mit Ansteuersignalen VE und HE beaufschlagt. Der Steuereinheit werden Ausgangssignale verschiedener Sensoren 130 zugeleitet.

Die Sensoren 130 erfassen verschiedene Betriebskenngrößen der Brennkraftmaschine sowie verschiedene Umweltbedingungen. Dies sind insbesondere Signale bezüglich der Drehzahl der Brennkraftmaschine und verschiedene Temperatur- und Druckwerte. Ausgehend von diesen Signalen und dem Fahrerwunsch berechnet die Steuereinheit 120 die Signale VE und HE, mit der die Kraftstoffzumesseinrichtung 110 beaufschlagt wird.

Insbesondere bei direkt einspritzenden Dieselbrennkraftmaschinen wird die einzuspritzende Kraftstoffmenge in wenigstens eine Voreinspritzung und eine Haupteinspritzung aufgeteilt. Neben der Voreinspritzung und der Haupteinspritzung sind noch weitere Teileinspritzungen, wie eine zweite Voreinspritzung und/oder eine Nacheinspritzung möglich. Des weiteren kann auch die Haupteinspritzung noch in zusätzliche Teileinspritzungen aufgeteilt werden. In dem dargestellten Ausführungsbeispiel ist lediglich eine Voreinspritzung und eine Haupteinspritzung vorgesehen.

Das Signal VE bestimmt die Voreinspritzung und das HE bestimmt die Haupteinspritzung. Im wesentlichen bestimmen die Signale den Beginn und die Menge der jeweiligen Einspritzung. Abhängig von diesen Signalen misst die Kraftstoffzumesseinrichtung 110 eine entsprechende Kraftstoffmenge der Brennkraftmaschine 100 zu.

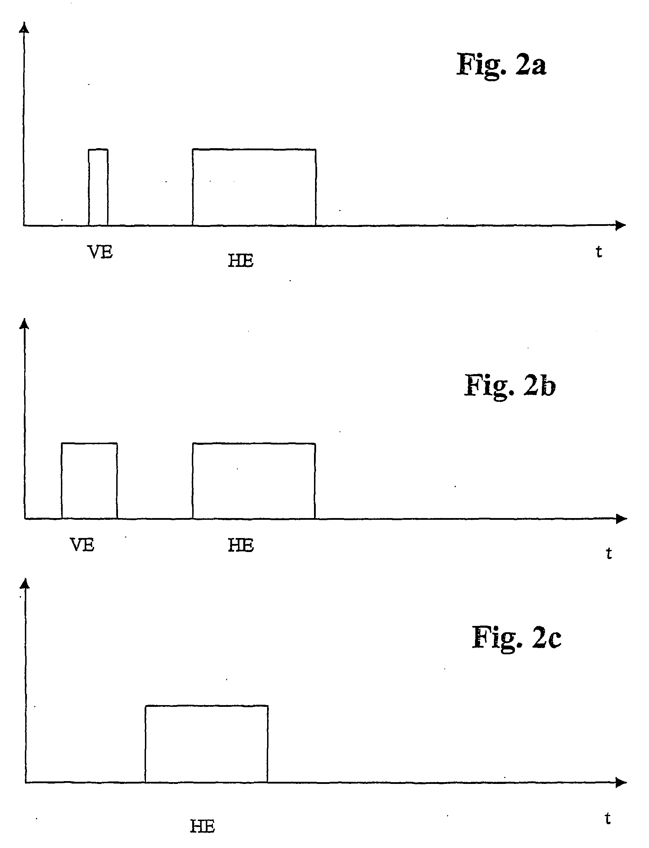

In Figur 2 sind die Einspritzverläufe, d.h. das Ansteuersignal für die Kraftstoffzumesseinrichtung oder eine entsprechende Größe über der Zeit t aufgetragen. Die Voreinspritzung ist wieder mit VE und die Haupteinspritzung mit HE bezeichnet.

In der Teilfigur 2a ist ein Betriebszustand dargestellt, bei dem eine Voreinspritzung erfolgt. Dabei wird ca. 5 % der Einspritzmenge bei der Voreinspritzung zugemessen. In Teilfigur 2c ist eine Einspritzung ohne Voreinspritzung dargestellt. In der Figur 2b ist der Übergang vom Zustand mit Voreinspritzung zum Zustand ohne Voreinspritzung dargestellt.

Während des Übergangs wird die Menge der Voreinspritzung erhöht, d.h. die Dauer der Voreinspritzung wird kontinuierlich verlängert. Vorzugsweise wird die Menge der Haupteinspritzung um einen entsprechenden Betrag verkleinert, der so gewählt ist, dass das abgegebene Drehmoment konstant bleibt. Erreicht das Geräuschniveau den Wert, der üblicherweise in diesem Betriebszustand ohne Voreinspritzung erreicht wird, wird die Voreinspritzung VE zu Null gesetzt und die Haupteinspritzung in Richtung früh verschoben.

Dies bedeutet, um den plötzlichen Anstieg der Verbrennungsgeräusche nach dem Abschalten der Voreinspritzung zu reduzieren, kann das Verbrennungsgeräusch vor der Abschaltung der Voreinspritzung kontinuierlich erhöht. Dazu wird bei dieser Ausführungsform die Voreinspritzmenge bis zu 60 % der Gesamteinspritzmenge angehoben. Die Voreinspritzmenge wird soweit erhöht, dass der Verbrennungsdruckgradient zum Zündzeitpunkt der Voreinspritzung dem Verbrennungsdruckgradienten beim Betrieb ohne Voreinspritzung entspricht. Der Verbrennungsdruckgradient entspricht der Änderung des Verbrennungsdrucks zum Zündzeitpunkt.

Dadurch ist das Verbrennungsgeräusch unmittelbar vor Abschaltung der Voreinspritzung annähernd gleich dem Verbrennungsgeräusch nach Abschalten der Voreinspritzung.

Besonders vorteilhaft ist es, dass die Erhöhung der Voreinspritzmenge nicht nur eine Reduzierung des Geräusches, sondern auch eine Verlagerung des Verbrennungsschwerpunktes nach früh bewirkt. Dadurch reduziert sich der erforderliche Spritzverstellerlagesprung, der für den Ausgleich des Spritzbeginnsprungs der Haupteinspritzung bei Abschaltung der Voreinspritzung notwendig ist.

Beim Umschaltung auf den Zustand ohne Voreinspritzung muss der Verbrennungsschwerpunkt in Richtung früh verstellt werden, damit entsprechende Verbrauchswerte und/oder Emissionswerte erzielt werden bzw. ein entsprechendes Drehmoment von der Brennkraftmaschine abgegeben wird. Durch das Erhöhen der Voreinspritzmenge in Richtung früh verlagert sich der Verbrennungsschwerpunkt in Richtung früh. Der Unterschied zwischen dem Verbrennungsschwerpunkt beim Abschalten der Voreinspritzung ist bei dieser erfindungsgemäßen Ausgestaltung deutlich kleiner, als bei anderen Umschaltstrategien.

Bei der erfindungsgemäßen Vorgehensweise wird das Verbrennungsgeräusch vor dem Abschalten der Voreinspritzung dadurch erhöht, dass die Voreinspritzung beim Übergang auf einen Zustand ohne Voreinspritzung zunächst für einzelne Einspritzungen abgeschaltet, d.h. ausgeblendet wird. Diese Einzelabschaltung der Voreinspritzung bei einzelnen Zumessungen ist in relativer Häufigkeit so ausgestaltet, dass sie kontinuierlich zunimmt. Dies bedeutet: Bei jeder n-ten Einspritzung wird die Voreinspritzung ausgeblendet. Dabei wird die Zahl n kontinuierlich von einem hohen Wert auf einen niederen Wert, vorzugsweise 1 abgesenkt. Beim Wert 1 erfolgt keine Voreinspritzung, bei einem hohen Wert erfolgt praktisch jede Voreinspritzung. Das Muster der ein- und ausgeschalteten Einspritzungen wird dabei auf psychoakustische Belange abgestimmt.

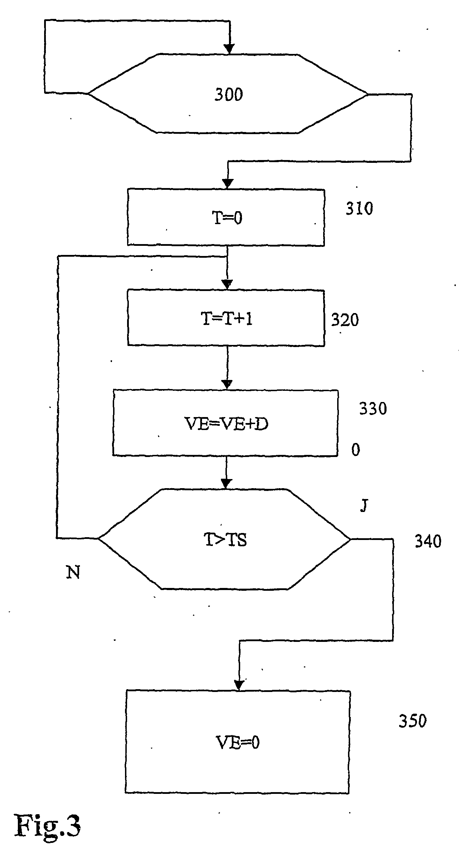

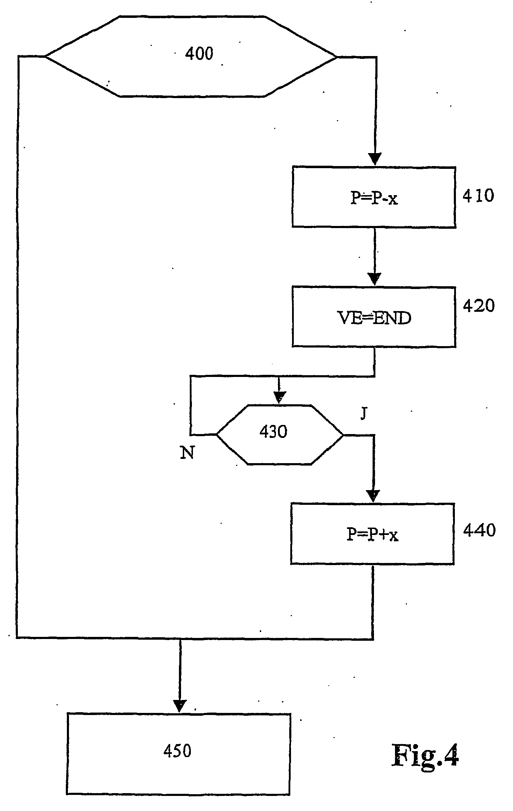

In Figur 3 ist die Vorgehensweise als Blockdiagramm dargestellt. Eine erste Abfrage 300 überprüft, ob ein Betriebszustand vorliegt, bei dem die Voreinspritzung abzuschalten ist. Ist dies nicht der Fall, so erfolgt erneut Abfrage 300. Ist dies der Fall, so wird ein Zeitzähler T auf Null gesetzt. Anschließend in Schritt 320 wird der Zeitzähler T um 1 erhöht. Im anschließenden Schritt 330 erfolgt eine Erhöhung der Voreinspritzungsmenge VE um den Wert D. Die Abfrage 340 überprüft, ob der Zeitzähler größer als ein Schwellenwert TS ist. Ist dies nicht der Fall, so erfolgt erneut Schritt 320. Ist dies der Fall, so wird in Schritt 350 die Voreinspritzung VE zu Null gesetzt, d.h. abgeschaltet und die Haupteinspritzung entsprechend angepasst. Bei der dargestellten Ausführungsform erfolgt der Übergang von einem Zustand mit auf einen Zustand ohne Voreinspritzung zeitgesteuert.

Erfindungsgemäß kann anstatt der Zeitabfrage 340 eine entsprechende Abfrage erfolgen, bei der überprüft wird, ob die Dauer und/oder die Menge der Voreinspritzung VE größer als ein Schwellenwert ist. Alternativ kann auch vorgesehen sein, dass eine andere Messgröße dahingehend überprüft wird, ob ein Schwellenwert überschritten ist und dann Schritt 350 folgt.

Besonders vorteilhaft ist es, wenn auch beim Übergang von einem Zustand ohne Voreinspritzung zu einem Zustand mit Voreinspritzung entsprechend vorgegangen wird. Beispielsweise kann vorgesehen sein, dass die Anzahl der Voreinspritzungen nicht abrupt sondern kontinuierlich auf den vorgesehenen Wert erhöht wird.

Ferner kann die Vorgehensweise auch bei Systemen mit mehr als zwei Teileinspritzungen eingesetzt werden.

## Patentansprüche

1. verfahren zur Steuerung der Kraftstoffeinspritzung in eine Brennkraftmaschine, wobei wenigstens zwischen einem ersten Zustand und ein zweiten Zustand unterschieden wird, wobei in dem ersten Zustand wenigstens eine erste Teileinspritzung und eine zweite Teileinspritzung erfolgt und in dem zweiten Zustand keine erste Teileinspritzung erfolgt, **dadurch gekennzeichnet, daß** unmittelbar vor dem Übergang von dem ersten Zustand in den zweiten zustand die Daten der Einspritzung derart verändert werden, dass die Emissionen, insbesondere die Geräuschentwicklung, allmählich an die Emissionen im zweiten Zustand angenähert werden, wobei hierzu die Häufigkeit der Einspritzung mit einer ersten Teileinspritzungen verändert wird.

2. Verfahren zur Steuerung der Kraftstoffeinspritzung in eine Brennkraftmaschine, wobei wenigstens zwischen einem ersten Zustand und ein zweiten Zustand unterschieden wird, wobei in dem zweiten Zustand wenigstens eine erste Teileinspritzung und eine zweite Teileinspritzung erfolgt und in dem ersten Zustand keine erste Teileinspritzung erfolgt, **dadurch gekennzeichnet, daß** unmittelbar vor dem Übergang von dem ersten Zustand in den zweiten Zustand die Daten der Einspritzung derart verändert werden, dass die Emissionen, insbesondere die Geräuschentwicklung, allmählich an die Emissionen im zweiten Zustand angenähert werden, wobei hierzu die Häufigkeit der Einspritzungen mit einer ersten Teileinspritzungen verändert wird.

3. Verfahren nach einem der Ansprüche 1, **dadurch gekennzeichnet, daß** die Emissionen kontinuierlich erhöht werden.

4. Verfahren nach einem der vorhergehenden Ansprüche, **dadurch gekennzeichnet, daß** die Anzahl der Einspritzungen mit einer ersten Teileinspritzungen kontinuierlich verringert wird.

5. Vorrichtung zur Steuerung der Kraftstoffeinspritzung in eine Brennkraftmaschine, wobei wenigstens zwischen einem ersten Zustand und ein zweiten Zustand unterschieden wird, wobei in dem ersten Zustand wenigstens eine erste Teileinspritzung und eine zweite Teileinspritzung erfolgt und in dem zweiten Zustand keine erste Teileinspritzung erfolgt, **dadurch gekennzeichnet, daß** Mittel vorgesehen sind, die unmittelbar vor dem Übergang von dem ersten zustand in den zweiten Zustand die Daten der Einspritzung derart verändern, dass die Emissionen, insbesondere die Geräuschentwicklung, allmählich an die Emissionen im zweiten Zustand angenähert werden, wobei die Mittel hierzu die Häufigkeit der Einspritzungen mit einer ersten Teileinspritzungen verändern.

6. Vorrichtung zur Steuerung der Kraftstoffeinspritzung in eine Brennkraftmaschine, wobei wenigstens zwischen einem ersten Zustand und ein zweiten Zustand unterschieden wird, wobei in dem zweiten Zustand wenigstens eine erste Teileinspritzung und eine zweite Teileinspritzung erfolgt und in dem ersten Zustand keine erste Teileinspritzung erfolgt, **dadurch gekennzeichnet, daß** Mittel vorgesehen sind, die unmittelbar vor dem Übergang von dem ersten Zustand in den zweiten Zustand die Daten der Einspritzung derart verändern, dass die Emissionen, insbesondere die Geräuschentwicklung, allmählich an die Emissionen im zweiten Zustand angenähert werden, wobei die Mittel hierzu die Haufigkeit der Einspritzungen mit einer ersten Teileinspritzungen verändern.

## Claims

1. Method for controlling the injection of fuel in an internal combustion engine, in which a distinction is made at least between a first state and a second state, in which in a first state at least a first partial injection and a second partial injection take place, and in the second state no first partial injection takes place, **characterized in that** directly before the transition from the first state into the second state the data of the injection is changed in such a way that the emissions, in particular the generation of noise, are made to gradually approach the emissions in the second state, with the frequency of the injection with a first partial injection being changed for this purpose.

2. Method for controlling the injection of fuel in an internal combustion engine, in which a distinction is made at least between a first state and a second state, in which in the second state at least a first partial injection and a second partial injection take place, and in the first state no first partial injection takes place, **characterized in that** directly before the transition from the first state into the second state the data of the injection is changed in such a way that the emissions, in particular the generation of noise, are made to gradually approach the emissions in the second state, with the frequency of the injections with a first partial injection being changed for this purpose.

3. Method according to one of Claims 1, **characterized in that** the emissions are increased continuously.

4. Method according to one of the preceding claims, **characterized in that** the number of injections with a first partial injection is reduced continuously.

5. Device for controlling the injection of fuel in an internal combustion engine, in which a distinction is made between at least a first state and a second state, in which in the first state at least a first partial injection and a second partial injection take place, and in the second state no first partial injection takes place, **characterized in that** means are provided which, directly before the transition from the first state into the second state, change the data of the injection in such a way that the emissions, in particular the generation of noise, are made to gradually approach the emissions in the second state, with the means changing the frequency of the injections with a first partial injection for this purpose.

6. Device for controlling the injection of fuel in an internal combustion engine, in which a distinction is made between at least a first state and a second state, in which in the second state at least a first partial injection and a second partial injection take place, and in the first state no first partial injection takes place, **characterized in that** means are provided which, directly before the transition from the first state into the second state, change the data of the injection in such a way that the emissions, in particular the generation of noise, are made to gradually approach the emissions in the second state, with the means changing the frequency of the injections with a first partial injection for this purpose.

## Revendications

1. Procédé de commande de l'injection de carburant dans un moteur à combustion interne, selon lequel on distingue au moins un premier état et un deuxième état, dans le premier état on effectue au moins une première injection partielle et une deuxième injection partielle, alors que dans le deuxième état on n'effectue pas de première injection partielle,
**caractérisé en ce que**
directement avant le passage du premier état au deuxième état on modifie les données de l'injection pour rapprocher les émissions, en particulier le développement de bruits, peu à peu dans le deuxième état, en modifiant à cet effet la fréquence de l'injection avec une première injection partielle.

2. Procédé de commande de l'injection de carburant dans un moteur à combustion interne, selon lequel on distingue au moins un premier état et un deuxième état, dans le deuxième état on effectue au moins une première injection partielle et une deuxième injection partielle, alors que dans le premier état on n'effectue pas de première injection partielle,
**caractérisé en ce que**
directement avant le passage du premier état au deuxième état on modifie les données de l'injection pour rapprocher les émissions, en particulier le développement de bruits, peu à peu dans le deuxième état en modifiant à cet effet la fréquence des injections avec une première injection partielle.

3. Procédé selon l'une des revendications 1 ou 2,
**caractérisé en ce que**
les émissions augmentent continuellement.

4. Procédé selon l'une quelconque des revendications précédentes,
**caractérisé en ce que**
le nombre des injections avec une première injection partielle diminue continuellement.

5. Dispositif de commande de l'injection de carburant dans un moteur à combustion interne, dans lequel on fait la distinction au moins entre un premier état et au moins un deuxième état, dans le premier état on effectue au moins une première injection partielle et une deuxième injection partielle, alors que dans le deuxième état on n'effectue pas de première injection partielle,
**caractérisé par**
des moyens qui directement avant le passage du premier état au deuxième état modifient les données de l'injection pour rapprocher les émissions, en particulier le développement de bruits, peu à peu dans le deuxième état, les moyens modifiant à cet effet la fréquence des injections avec une première injection partielle.

6. Dispositif de commande de l'injection de carburant dans un moteur à combustion interne, dans lequel on fait la distinction au moins entre un premier état et au moins un deuxième état, dans le deuxième état on effectue au moins une première injection partielle et une deuxième injection partielle alors que dans le premier état on n'effectue pas de première injection partielle,
**caractérisé en ce que**
des moyens sont prévus qui modifient les données de l'injection directement avant le passage du premier état au deuxième état de telle sorte que les émissions, en particulier le développement de bruits, s'approchent peu à peu aux émissions dans le deuxième état, les moyens modifiant à cet effet la fréquence des injections avec une première injection partielle.
